# FASCICULE DE BREVET EUROPEEN

(11) **EP 3 173 645 B1**
(45) Date de publication et mention de la délivrance du brevet: **27.02.2019**
(21) Numéro de dépôt: 16200608.4
(22) Date de dépôt: 25.11.2016
(51) Int. Cl.: F16C 43/04, F16C 33/38, F16C 43/06, F16C 19/16, F16C 19/18, F16C 19/50

(54) **CAGE POUR SYSTÈME DE ROULEMENT ET SYSTÈME DE ROULEMENT COMPORTANT UNE TELLE CAGE**
WÄLZLAGERKÄFIG UND WÄLZLAGER MIT DERARTIGEM WÄLZLAGERKÄFIG
ROLLING BEARING CAGE UND ROLLING BEARING COMPRISING SUCH A CAGE

(30) Priorité: 27.11.2015 FR 1561478
(43) Date de publication de la demande: 31.05.2017
(73) Titulaire: NTN-SNR Roulements, 74010 Annecy (FR)
(72) Inventeur: CAPORALE, Florian, 74320 LESCHAUX (FR); LEFORT, Guillaume, 74000 ANNECY (FR)
(74) Mandataire: Derambure Conseil

(56) Documents cités:
- FR-A- 1 013 601
- GB-A- 592 947
- JP-A- 2008 232 295
- JP-A- 2010 071 321
- JP-A- 2014 020 392
- JP-A- 2014 088 928

## Description

L'invention concerne notamment une cage pour un système de roulement, ainsi qu'un système de roulement comportant une telle cage.

Elle concerne également un ensemble comportant une telle cage et un outillage associé, permettant le montage du système de roulement.

On connait une cage pour un système de roulement, ladite cage étant monobloc et comprenant une paroi tronconique qui s'étend autour d'un axe de la cage, la paroi tronconique présentant :
- une surface intérieure et une surface extérieure,
- des espaces ouverts traversants, répartis de façon équidistante sur toute la paroi tronconique et chacun des espaces ouverts étant apte à accueillir un corps roulant, la paroi tronconique s'étendant entre un premier bord présentant un premier diamètre et un second bord présentant un second diamètre, le second diamètre étant plus grand que le premier diamètre,
le second bord comportant une extrémité de bord reliant la surface extérieure et la surface intérieure de la paroi tronconique,

Une telle cage est par exemple décrite dans le document FR 2 882 116 qui divulgue les caractéristiques du préambule de la revendication 1. D'autres cages tronconiques de type monobloc sont connues des documents JP2014088928, GB592947 ou JP2008232295. Le document JP2014088928 décrit par ailleurs un procédé de montage empêchant les corps roulants de sortir de leur logement pendant l'assemblage d'un roulement comportant une rangée de rouleaux coniques.

Il est parfois compliqué de monter un système de roulement équipé d'une telle cage, notamment lorsque le système de roulement comporte deux rangées de corps roulants comportant chacune une cage conique : en effet, lors du montage de la seconde rangée de corps roulants, il est difficile de maintenir en place la cage pour y positionner les corps roulants.

Une première solution est d'équiper les cages de moyens de retenue des corps roulants. Une telle solution n'est toutefois pas toujours possible pour des questions de coûts, ou pour des questions liées à un cahier des charges imposant des dimensions plus petites qu'usuellement, pour réaliser un dispositif de roulement.

L'invention propose donc une alternative à la réalisation de cages équipées de moyens de retenue des corps roulants.

Ci-après, un exposé de l'invention.

Selon un premier aspect, l'invention a pour objet une cage pour système de roulement selon la revendication 1, ladite cage étant monobloc et comprenant une paroi tronconique qui s'étend autour d'un axe de la cage, la paroi tronconique présentant
- une surface intérieure et une surface extérieure,
- des espaces ouverts traversants, répartis de façon équidistante sur toute la paroi tronconique et chacun des espaces ouverts étant apte à accueillir un corps roulant, la paroi tronconique s'étendant entre un premier bord présentant un premier diamètre et un second bord présentent un second diamètre, le second diamètre étant plus grand que le premier diamètre,
le second bord comportant une extrémité de bord reliant la surface extérieure et la surface intérieure de la paroi tronconique. La cage selon l'invention est remarquable en ce que l'extrémité de bord présente au moins un logement d'accueil adapté pour accueillir un élément de fixation amovible d'un outillage de positionnement et en ce que ledit au moins un logement d'accueil comporte au moins un trou (11) réalisé suivant une direction parallèle à l'axe (X) de la cage.

Selon une réalisation non limitative de l'invention, le logement d'accueil est un trou, traversant au moins partiellement la paroi tronconique entre deux espaces ouverts.

Selon une réalisation, laquelle il est prévu trois logements d'accueil sous forme de trois trous (11) réalisés suivant une direction parallèle à l'axe (X) de la cage.

Selon encore une réalisation, le trou débouche sur la surface extérieure de la paroi tronconique entre deux espaces ouverts.

Selon encore une réalisation, le trou débouche sensiblement à mi-distance entre le premier bord et le second bord.

Selon encore une réalisation, le (ou les) logement(s) d'accueil est (sont) un (ou des) trou(s) borgne(s) réalisé(s) entre deux espaces ouverts traversants dans l'épaisseur de la cage.

Selon encore une réalisation, la cage comporte deux logements d'accueil réalisés diamétralement opposés si le nombre d'espaces ouverts est pair, et diamétralement opposés décalés d'une distance correspondant à la moitié de la distance prise entre un bord d'un espace ouvert et le bord d'un espace ouvert adjacent si le nombre d'alvéoles est impair.

Selon encore une réalisation, la cage comporte trois logements d'accueil réalisés dans l'extrémité de bord du second bord, les logements étant réalisés équidistants les uns des autres si le nombre d'alvéoles correspond à un multiple de trois et étant réalisés non équidistants les uns des autres si le nombre d'alvéoles n'est pas un multiple de trois.

Selon encore une réalisation, la paroi tronconique est inclinée d'un angle compris entre sensiblement 5 et 35 degrés avec l'axe de la cage.

Selon encore une réalisation, la paroi tronconique est inclinée d'un angle compris entre sensiblement 5 et 50 degrés avec l'axe de la cage.

Selon encore une réalisation, le premier bord présente une extrémité coudée orientée vers l'extérieur de la cage.

Selon encore une réalisation, les espaces ouverts sont de section circulaire, pour accueillir des corps roulants sous forme de billes ou bien sont de forme trapézoïdale pour accueillir des corps roulants réalisés sous forme de rouleaux coniques.

L'invention concerne également un système de roulement comportant :
-- au moins une bague extérieure présentant un chemin de roulement extérieur,
- au moins une bague intérieure présentant un chemin de roulement intérieur,
   lesdites bagues intérieure et extérieure étant coaxiales centrées autour d'un axe de roulement,
- un jeu de corps roulants roulant à la fois sur le chemin de roulement intérieur et le chemin de roulement extérieur dans un premier espace interne,
   et au moins une cage selon l'invention, telle que définie ci avant, les corps roulants étant insérés dans les espaces ouverts traversants.

Selon encore une réalisation, le système de roulement tel que défini ci-dessus comporte :
- au moins une seconde bague intérieure présentant un second chemin de roulement intérieur,
   ladite seconde bague intérieure et ladite bague extérieure étant coaxiales centrées autour dudit axe de roulement,
- un second jeu de corps roulants, roulant à la fois sur le second chemin de roulement intérieur et sur un second chemin de roulement extérieur de la bague extérieure dans un second espace interne,
   et au moins une seconde cage, ladite seconde cage étant monobloc et comprenant :
   - une paroi tronconique s'étendant autour d'un axe, une surface intérieure apte à faire face au second chemin de roulement intérieur et une surface extérieure apte à faire face audit second chemin de roulement extérieur,
   - des espaces ouverts étant ménagés à travers la paroi tronconique, les espaces ouverts étant uniformément répartis sur toute la paroi tronconique et chacun des espaces ouverts étant destiné à accueillir un corps roulant dudit jeu de corps roulants,
      o la paroi tronconique s'étendant entre un premier bord présentant un premier diamètre et un second bord présentent un second diamètre, le second diamètre étant plus grand que le premier diamètre,
      o le second bord comportant une extrémité de bord reliant la surface extérieure et la surface intérieure de la paroi tronconique.

L'invention concerne également un ensemble comportant une cage pour système de roulement tel que défini ci-dessus et un outillage de positionnement de la cage dans un système de roulement, ledit outillage comportant un collier équipé d'au moins un élément de fixation, apte à s'insérer au moins partiellement dans au moins un logement d'accueil de ladite cage.

Suivant une première réalisation, ledit élément de fixation est une vis apte à s'insérer dans ladite ouverture traversante et à se fixer par vissage dans un trou de ladite cage.

Suivant une autre réalisation, ledit élément de fixation est un doigt comprenant au voisinage de l'une de ses extrémités une bille escamotable.

Suivant encore une autre réalisation, ledit élément de fixation est un crochet apte à venir s'engager dans un logement borgne radial de la cage.

Selon une réalisation, le collier présente un bord présentant au moins partiellement un rebord qui s'étend suivant une direction radiale vers l'extérieur du collier.

Enfin, l'invention concerne un procédé de montage selon la revendication 17 d'un système de roulement tel que défini ci-dessus, mettant en oeuvre un ensemble tel que défini ci-dessus, le procédé comportant les étapes suivantes :
- assemblage de la cage et de l'outillage de positionnement, en positionnant le collier de façon coaxial sur ladite cage et par engagement dudit élément de fixation dans le logement d'accueil de ladite cage-positionnement de l'ensemble comportant la cage et l'outillage de positionnement dans la bague extérieure, en plaçant la paroi tronconique extérieure de la cage en face du chemin de roulement extérieur,
- positionnement des corps roulants dans les espaces ouverts traversant de la paroi tronconique de la cage,
- positionnement de la bague intérieure en plaçant le premier chemin de roulement intérieur en face des corps roulants placés dans les espaces ouverts de la cage,
- et retrait de l'outillage de positionnement par désengagement dudit élément de fixation dudit logement d'accueil.

Selon un mode de mise en oeuvre du procédé conforme à l'invention, l'étape de positionnement de l'ensemble comportant la cage et l'outillage de positionnement est réalisée en faisant reposer un rebord de l'outillage sur un rebord de la bague extérieure.

Parmi les avantages de l'invention, on peut noter qu'elle permet un assemblage facile, mettant en oeuvre un outillage qui peut être utilisé à plusieurs reprises, ce qui rend l'invention peut couteuse à être mise en oeuvre.

On décrit maintenant brièvement les figures des dessins.
La figure 1 est une vue de dessus d'une cage selon un mode de réalisation de l'invention.
La figure 2 est une vue en perspective de la cage montrée en figure 1.
La figure 3 est une vue en coupe partielle de la cage montrée en figures 1 et 2, solidarisée à un outil de positionnement.
La figure 4 est une vue en coupe partielle de la cage solidarisée à l'outil de positionnement, et d'une bague extérieure d'un système de roulement conforme à l'invention, lors d'une première étape de montage conformément à la mise en oeuvre d'un procédé selon l'invention.
La figure 5 est une vue en coupe partielle de la cage solidarisée à l'outil de positionnement, de la bague extérieure du système de roulement montrée en figure 4, lors d'une seconde étape de montage conformément à la mise en oeuvre du procédé selon l'invention.
La figure 6 est une vue en coupe partielle de la cage solidarisée à l'outil de positionnement, de la bague extérieure du système de roulement montrée en figures 4 et 5, d'une bague intérieure du système de roulement, lors d'une troisième étape de montage conformément à la mise en oeuvre du procédé selon l'invention.
La figure 7 est une vue en coupe partielle de la cage désolidarisée (de l'outil de positionnement, des bagues extérieure et intérieure du système de roulement, lors d'une quatrième étape de montage conformément à la mise en oeuvre d'un procédé selon l'invention.
La figure 8 est une vue en coupe partielle du système de roulement monté entièrement.

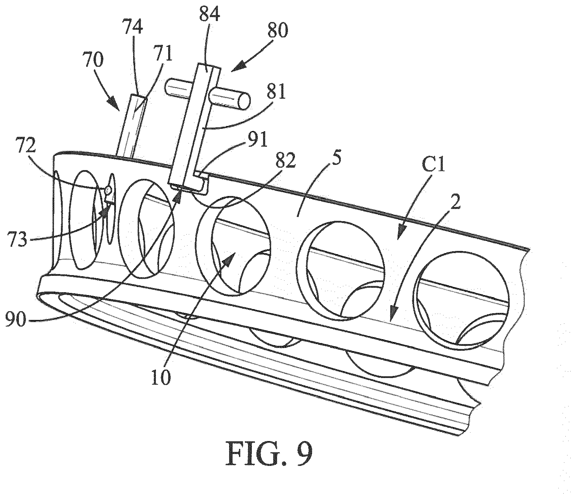

Enfin, la figure 9 est une vue en perspective montrant partiellement une cage conforme à l'invention et deux exemples d'éléments de fixation différents d'un outillage, les éléments de fixation étant montrés en prise chacun avec un logement d'accueil respectif adapté, prévu dans la cage.

Ci-après un exposé détaillé de deux modes de réalisation de l'invention assorti de références aux dessins.

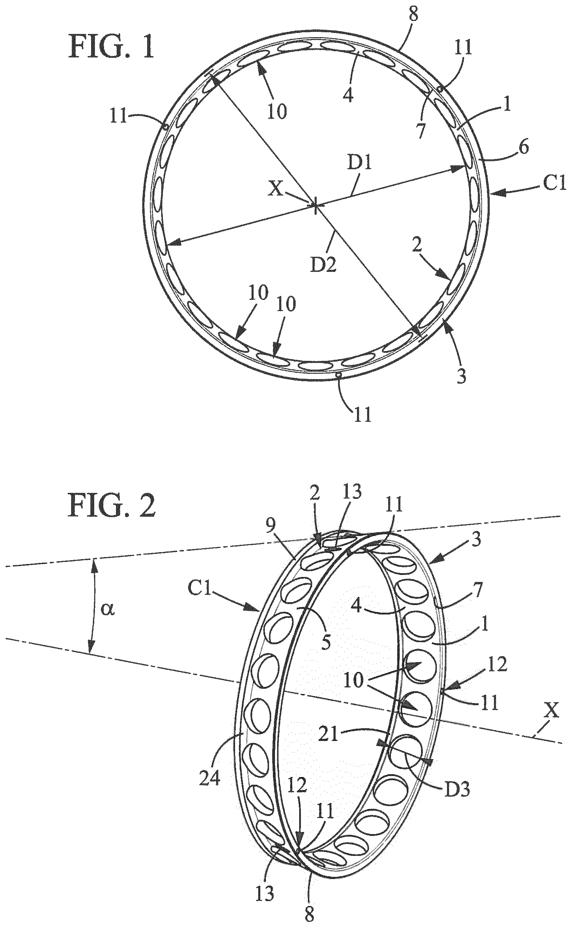

Les figures 1 et 2 montrent une cage C1 seule, conforme à l'invention en vue de dessus et vue en perspective.

La cage C1 est monobloc et comporte une paroi tronconique 1 qui s'étend autour d'un axe X.

La paroi tronconique 1 s'étend axialement entre un premier bord 2 présentant un premier diamètre D1 et un second bord 3 présentant un second diamètre D2, le second diamètre D2 étant supérieur au premier diamètre D1.

Selon un exemple de réalisation, D2 peut mesurer sensiblement environ 180 mm, tandis que D1 peut mesurer sensiblement 160mm (millimètres).

La paroi tronconique est inclinée d'un angle α compris sensiblement entre 5 et 50° °avec l'axe X de la cage C1. La valeur de l'inclinaison dépend notamment de la forme de corps roulants accueillis dans la cage C1.

La paroi tronconique 1 présente également une surface intérieure 4, orientée vers l'intérieur de la cage C1, et une surface extérieure 5, orientée vers l'extérieur de la cage C1.

Le second bord3 (c'est-à-dire, le bord qui présente le plus grand diamètre D2) de la paroi tronconique présente une extrémité de bord 6.

Plus précisément, l'extrémité de bord 6 est un anneau plat, qui s'étend entre un cercle limite interne 7 et un cercle limite externe 8.

Le cercle limite interne 7 correspond à la tranche reliant l'extrémité de bord 6 et la surface intérieure 4 de la paroi tronconique 1.

Le cercle limite externe 8 correspond à la tranche reliant l'extrémité de bord 6 et la surface externe 5 de la paroi tronconique 1.

Le premier bord 2 de la paroi tronconique 1 (c'est-à-dire le bord qui présente le plus petit diamètre D1) est plus particulièrement visible en figure 2.

Le premier bord 2 est solidaire d'une couronne 9 coaxiale, de plus grand diamètre que celui du premier bord 2, de sorte que la couronne 9 forme une extrémité coudée du premier bord 2, cette dernière étant orientée radialement vers l'extérieur de la cage C1.

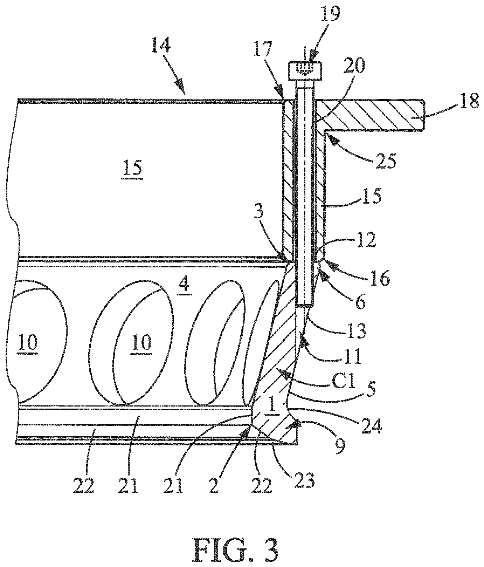

La figure 3 montre davantage la forme du premier bord 2 qui se prolonge par la couronne 9 formant l'extrémité coudée orientée vers l'extérieur de la cage C1.

La paroi tronconique 1 présente, à son extrémité au voisinage du bord 2 et du côté de sa surface intérieure 4, un premier changement de direction de manière à former une surface annulaire 21 parallèle à l'axe X de la cage C1. Puis, contigu à la surface annulaire 21, le premier bord 2 présente un second changement de direction de sorte à présenter une seconde surface annulaire 22, formant un angle supérieur à 180 ° avec la première surface annulaire 21. Enfin, le premier bord présente un troisième changement de direction de sorte à présenter une troisième surface annulaire 23, formant également formant un angle supérieur à 180° avec la seconde surface annulaire 22.

Du côté de la surface extérieure 5, le premier bord 2 se courbe vers l'extérieur de la cage C1 de manière à former une surface concave 24 tournée vers l'extérieur de la cage C1.

La couronne 9, solidaire à la paroi tronconique 1, est définie entre la surface concave 24 et les trois surfaces annulaires contiguës internes 21 à 23.

La paroi 1 de la cage C1 est traversée, sur toute sa périphérie, par des espaces ouverts 10 répartis régulièrement.

Les espaces ouverts 10 sont des trous traversants dont la section est de forme circulaire, dont le diamètre D3 peut par exemple faire sensiblement 20 mm (millimètres).

Chacun des espaces ouverts 10 est conçu pour accueillir un corps roulant. Dans le cadre du présent exemple, les corps roulants sont des billes (comme il sera vu par la suite).

Conformément à l'invention, l'extrémité de bord 6 du second bord 3 présente trois logements d'accueil pour accueillir des éléments de fixation d'un outillage (voir par la suite).

Dans le cadre de ce mode de réalisation, les logements d'accueil sont réalisés par des trous taraudés 11.

Les trous taraudés sont réalisés équidistants les uns des autres, le nombre d'espaces ouverts 10 étant un multiple de trois

L'invention pourrait également prévoir des trous taraudés non équidistants si le nombre d'espaces ouverts 10 n'était pas un multiple de trois.

Les trous taraudés sont réalisé à travers l'épaisseur de la paroi tronconique 1, c'est-à-dire que des perçages sont réalisés dans la tranche de la paroi tronconique 1 dans l'extrémité de bord 6.

L'orientation des perçages est telle que les trous taraudés 11 traversent au moins partiellement la paroi tronconique 1. Dans l'exemple illustré, les trous taraudés présentent chacun un axe qui est sensiblement parallèle à l'axe X de la cage C1.

Dans le cadre de l'exemple illustré, les trous taraudés 11 présentent une extrémité 12 ouverte sur l'extrémité de bord 6, et une autre extrémité 13 débouchant sur la surface extérieure 5 de la paroi tronconique 1, entre deux espaces ouverts 10, et sensiblement à mi-distance entre le premier bord 2 et le second bord 3 de la paroi tronconique.

L'axe des trous taraudés 11 étant réalisé sensiblement parallèle à l'axe X de la cage C1, l'extrémité 13 a une ouverture de forme allongée suivant une direction axiale (voir figures 2 et 3) sur la surface extérieure 5 de la paroi 1 (voir figure 2).

La figure 3 montre la cage C1 illustrée sur les figures 1 et 2 assemblée à un outillage 14 permettant de monter un système de roulement conforme à l'invention (le système de roulement et les étapes de montage seront décrits par la suite).

L'outillage 14 comporte, d'une part, un collier dont la paroi 15 est de forme sensiblement cylindrique et dont le diamètre correspond sensiblement au diamètre D2 du second bord de la paroi 1 de la cage C1.

La paroi cylindrique 15 du collier de l'outil présente une extrémité 16, apte à être positionnée au droit de l'extrémité de bord 6 de la cage C1, ainsi qu'une extrémité 17 présentant un rebord 18 qui s'étend radialement vers l'extérieur du collier, de sorte à ce que le rebord 18 forme avec la paroi cylindrique 15 du collier un coude 25 (ou épaulement extérieur du collier).

La paroi cylindrique est percée de trois trous taraudés 20, traversant de part en part et axialement la paroi cylindrique 15 du collier, les trois trous taraudés traversants étant équidistants les uns des autres.

Les trois trous taraudés 20 présentent un même diamètre et un même pas de vis que les trous taraudés 11 de la cage C1.

L'outillage 14 comporte, d'autre part, trois vis 19 (une seule vis 19 est visible sur la figure 3), chacune des trois vis 19 étant apte à être vissée à travers les trois trous taraudés 20 du collier et à travers les trois trous taraudés 11 de la cage C1.

Les vis constituent, dans le cadre de ce mode de réalisation, un élément de fixation amovible conforme à l'invention, et peuvent aussi être utilisées dans le cas de trous 20 non taraudés.

II devra toutefois être compris que l'invention n'est pas limitée à la présence de telles vis - d'autres mode de réalisation pourraient être envisagés sans sortir du cadre de l'invention.

De cette façon, en plaçant chacun des trous taraudés 20 du collier dans le prolongement des trois trous taraudés 11 de la cage C1, l'outillage 14 et la cage C1 peuvent être fixés l'un à l'autre par vissage des vis 19 dans les trous 20 et 11. On notera que les vis 19 présentent, pour ce faire, une longueur suffisante supérieure à la hauteur de la paroi 15 du collier de l'outillage 14.

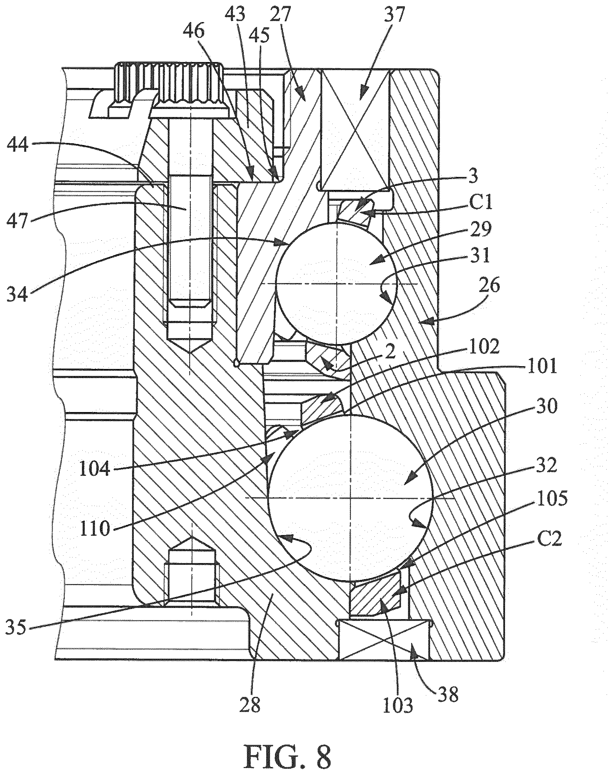

L'outillage 14 permet de faciliter le montage d'un système de roulement qui est illustré dans sa version complète en figure 8.

Le système de roulement comporte une bague extérieure 26, ainsi que deux bagues intérieures 27 et 28 qui sont conçues pour se placer à l'intérieur de la bague extérieure 26, de façon coaxiale, centrées autour de l'axe de roulement qui est confondu avec l'axe X de la cage C1 dans le cas présent.

Entre la bague extérieure 26 et chacune des bagues intérieures 27 et 28, sont délimités deux espaces internes dans chacun desquels sont enfermés, respectivement un premier 29 et un second 30 jeu de corps coulants, les corps roulants de chaque jeu étant positionnés dans les espaces ouverts 10 de deux cages C1 et C2 à paroi tronconique 1 et 101, la cage C2 étant monobloc.

Pour permettre aux corps roulants 29 et 30 de rouler, la bague extérieure 26 présente deux chemins de roulement 31 et 32, respectivement, sur chacun desquels les corps roulants 29 et 30 prennent appui. Les chemins de roulement 31 et 32 sont qualifiés de chemins de roulement « extérieurs » car ils sont ménagés dans la bague extérieure 26. Toutefois, ces chemins de roulement se trouvent à l'intérieur du système de roulement conforme à l'invention.

Les deux chemins de roulement 31 et 32 sont réalisés par des cavités dans la paroi intérieure 33 de la bague extérieure 26.

De même, en face de chacun des chemins de roulement 31 et 32, les bagues intérieures 27 et 28 présentent chacune un chemin de roulement 34 et 35, respectivement, sur chacun desquels les corps roulants 29 et 30 prennent également appui quand le système de roulement est monté.

Pour ce faire, les chemins de roulement 34 et 35, qualifiés « de chemins de roulement intérieurs », font face aux chemins de roulement extérieurs 31 et 32, respectivement.

Chacun des chemins de roulement intérieurs 34 et 35 présente une forme concave, contre laquelle les corps roulants 29 ou 30 peuvent prendre appui.

La courbure des chemins de roulement intérieurs 34 et 35 ou celle des chemins de roulement extérieurs 31 et 32 dépend ainsi du diamètre des corps roulants qui sont, dans le cadre de cet exemple, des billes (comme il a été indiqué précédemment).

La seconde cage C2 à paroi tronconique 101 s'étend autour d'un axe qui se confond avec l'axe de la cage montrée en figures 1 et 2, quand le système de roulement est entièrement monté comme en figure 8.

La paroi tronconique 101 présente une surface intérieure 104 apte à faire face au chemin de roulement intérieur 35 de la seconde bague intérieure 28 et une surface extérieure 105 apte à faire face audit second chemin de roulement extérieur 32 de la bague extérieure 26.

La seconde cage C2 présente également des espaces ouverts 110 qui sont ménagés à travers la paroi 101, les espaces ouverts étant uniformément répartis sur toute la paroi tronconique et chacun des espaces ouverts étant destiné à accueillir un corps roulant dudit second jeu de corps roulants.

Enfin, la paroi tronconique 101 de la cage C2 s'étend entre un premier bord 102 présentant un premier diamètre et un second bord 103 présentant un second diamètre, le second diamètre étant plus grand que le premier diamètre.

La difficulté, pour réaliser le montage du système de roulement montré en figure 8 est de permettre l'assemblage d'une bague intérieure tout en maintenant en position la cage et les corps roulants placés au préalable.

Grâce à l'invention, cet assemblage est rendu facile, comme il va maintenant être démontré en décrivant le procédé de montage conforme à l'invention, en faisant référence aux figures 3 à 7.

La première étape consiste à assembler la cage, montrée en figures 1 et 2, avec l'outillage 14 (figure 3).

Pour ce faire, le second bord 3 de la cage et le bord 16 de l'outillage 14 sont placés l'un contre l'autre, de sorte que les trous taraudés 13 de la cage arrivent en face des trous taraudés 20 de l'outillage.

L'outillage 14 est alors fixé à la cage par vissage, en vissant les vis 19 dans les trous 13 et 20.

II est à noter que le trou 20 peut être lisse.

On obtient alors l'ensemble montré en figure 3.

Puis, on positionne la bague extérieure 26 sur un support plan et horizontal.

L'ensemble cage 1 / outillage 14 est placé à l'intérieur de la bague extérieure 26, de sorte que le rebord formant épaulement 18 vienne se placer contre un bord supérieur 36 de la bague extérieure 26.

Dans cette position, la cage se place devant le chemin de roulement 31 de la bague extérieure 26. Elle est maintenue en position grâce à l'outillage 14 prenant appui contre le bord 36 de la bague extérieure 26.

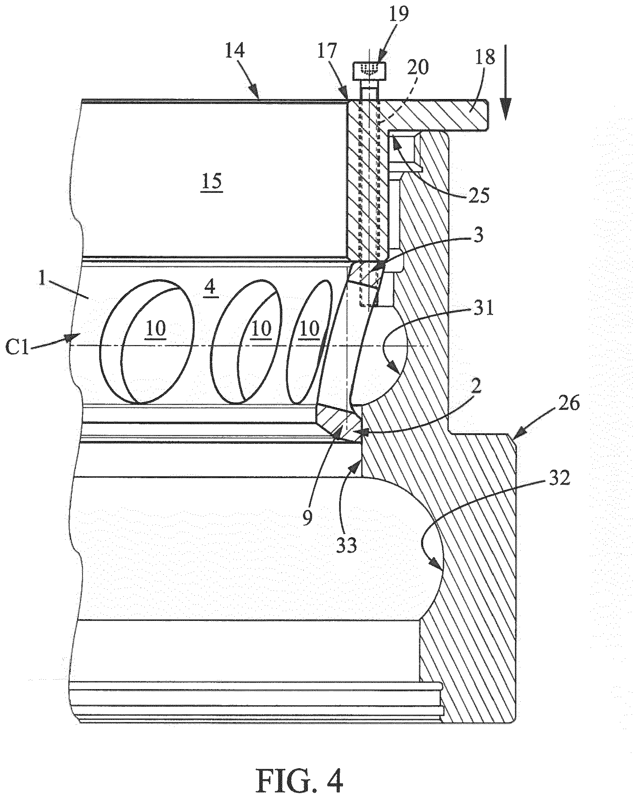

On obtient alors le montage illustré en figure 4.

Des billes 29 du premier jeu de corps roulants sont alors insérées une à une dans chacune des ouvertures 10 de la cage. Chacune des billes repose sur le chemin de roulement 31 et sur la cage de sorte que, comme la bague repose sur un support plan et horizontal, les billes 29 restent chacune dans leur logement de façon stable.

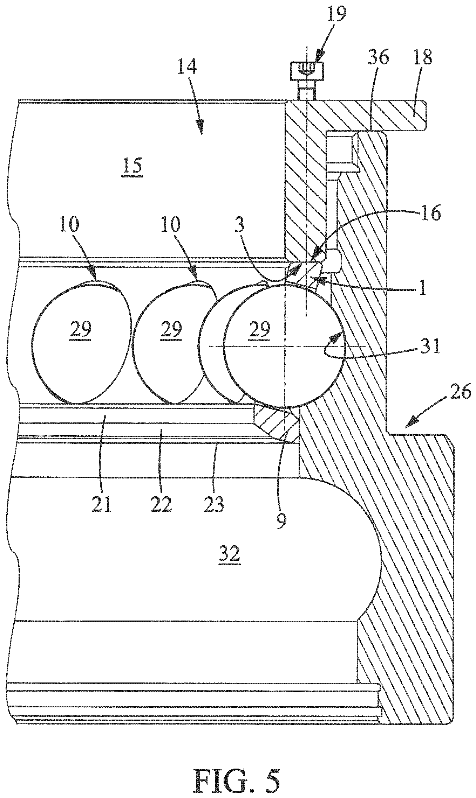

On obtient alors le montage illustré en figure 5.

La bague intérieure 27 est alors placée dans la bague extérieure 26 de manière coaxiale, et elle est introduite jusqu'à ce que les billes 29 viennent buter contre le chemin de roulement intérieur 34 de la bague intérieure 27. La bague intérieure 27 repose alors de façon stable sur un collier de billes 29 insérées dans les ouvertures 10 de la cage.

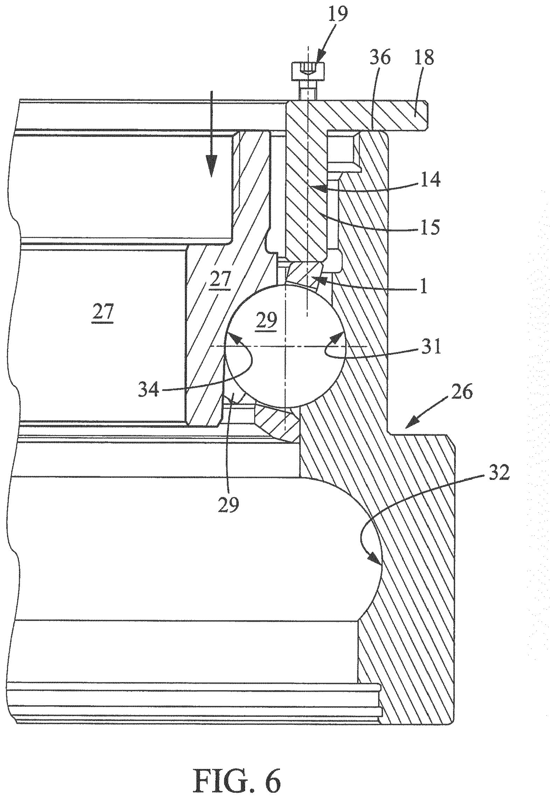

On obtient alors le montage montré en figure 6.

Dans cette position, la bague intérieure 27 prend appui sur le collier de billes 29 qui lui-même prend appui sur le chemin de roulement 31 de la bague extérieure 26. La cage et les billes 29 sont ainsi prises en sandwich entre la bague intérieure 27 et la bague extérieure 26 (figure 6).

II n'y a donc plus besoin de l'outillage 14 qui maintien en position la cage par rapport à la bague extérieure 26. On procède alors au retrait de l'outillage 14.

Pour ce faire, il convient, dans un premier temps, de dévisser les vis 19 et de les retirer des trous taraudés 13 de la cage. On désolidarise ainsi la cage de l'outillage 14.

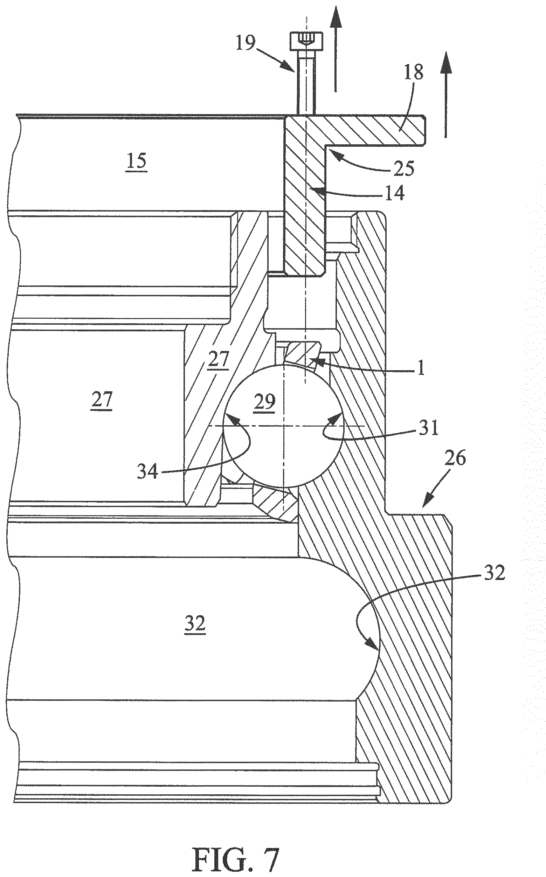

En saisissant l'outillage 14 par le rebord 18, on le retire de l'ensemble d'éléments assemblés, comme montré en figure 7.

On positionne alors un dispositif de fermeture 37 entre la bague intérieure 27 et la bague extérieure 26, au-dessus de la cage, pour éviter toute intrusion de corps étrangers entre la bague intérieure 27 et la bague extérieure 26.

L'ensemble composé des deux bagues intérieure 27 et extérieure 26, enfermant la cage, les billes 34 et le dispositif de fermeture 37, est alors mis en place autour de la bague intérieure 28, autour de laquelle la cage C2 et les billes 30 ont été préalablement positionnées.

Un second dispositif de fermeture 38 est positionné entre la bague extérieure 26 et la bague intérieure 28 au-dessous de la cage C2.

L'ensemble est maintenu en place en fixant la position de la bague intérieure 27 par rapport à la position de la bague intérieure 28. Pour ce faire, une couronne de fixation 43 est positionnée sur une extrémité supérieure 44 de la bague intérieure 28. La bague intérieure 27 présente un épaulement 45 dont un bord 46 se trouve au même niveau que l'extrémité 44 supérieure de la bague intérieure 28.

La couronne de fixation 43 est suffisamment large pour couvrir l'extrémité supérieure 44 et au moins partiellement le bord 46 de l'épaulement de la bague intérieure 27 de sorte à maintenir l'ensemble en place.

La couronne 43 est fixée dans la bague intérieure 28 par vissage d'au moyen une vis 47.

On comprend de la description qui précède comment l'invention permet de faciliter le montage d'un système de roulement, notamment en mettant en oeuvre un outillage facilement montable et démontable de la cage.

II devra toutefois être compris que l'invention n'est pas spécifiquement limitée au mode de réalisation décrit ci-dessus.

En effet, et par exemple, la figure 9 illustre deux autres alternatives de réalisation d'éléments de fixation amovibles de l'outil sur la cage.

Un premier élément de fixation 70 peut remplacer une vis 19 dans l'ensemble décrit et représenté sur les figures 1 à 8.

L'élément de fixation 70 comporte une tige de section circulaire 71 équipée, à son extrémité 73, d'une bille rétractable 72, par exemple une bille montée à l'extrémité d'un système à ressort interne à la tige. Quand aucune pression n'est exercée sur la bille 72, cette dernière est saillante par rapport à la surface de la paroi latérale de la tige. Pour introduire la tige dans les trous ou perçages de l'outil et de la cage, il faut exercer une pression sur la bille 72 afin de la faire rentrer dans la tige 71. Lorsque la bille 72 et la tige se trouvent dans un trou ou perçage de l'outil ou de la cage, la paroi interne du trou exerce une pression sur la bille et la maintient en position rétractée dans la tige, ce qui permet de poursuivre l'introduction de la tige dans le trou de la cage et de l'outil. Lorsque l'extrémité 73 de la tige sort du trou de la cage, la bille 72 sort de la tige 71 et constitue une butée à l'extraction de la tige 71.

II suffit alors d'exercer de nouveau une pression sur la bille 72 pour la faire rentrer dans la tige et permettre l'extraction de la tige 71 hors du trou de la cage et de l'outil.

La tige 71 pourrait également être prévue solidarisée à l'outil, en solidarisant à l'outil l'extrémité 74 qui est opposée à l'extrémité 73.

Un autre élément de fixation 80 est illustré en figure 9. II comporte une tige 81 de section sensiblement carrée présentant une extrémité coudée 82 formant un crochet. Au voisinage de l'autre extrémité 84, opposée à l'extrémité 82, la tige est traversée latéralement par un bras cylindrique 85 autour duquel la tige 81 est montée pivotante (il pourrait également être prévu de solidariser la tige 81 et le bras 85, et de monter le bras 85 pivotant dans un logement prévu à l'une et/ou l'autre des extrémités du bras 85).L'ensemble comportant la tige 81 et le bras 85 sont reliés à l'outil amovible par tout moyen connu de l'homme du métier.

Dans le cadre de ce mode de réalisation, on prévoit un logement d'accueil radial 90 dans la cage. Le logement radial est de section et de forme aptes à accueillir l'extrémité en crochet 82.

Le logement d'accueil 90 est ménagé au bord de la cage, de manière à former une encoche borgne radialement. Le logement d'accueil 90 présente une barrette saillante supérieure 91 sur laquelle s'accroche l'extrémité 82 de la tige 81.

On comprend ainsi, de ces variantes de réalisation, que l'invention n'est pas limitée aux modes de réalisation décrits et qu'elle s'étend à la mise en oeuvre de tout moyen équivalent.

## Revendications

1. Cage (C1) pour système de roulement, ladite cage étant monobloc et comprenant une paroi tronconique (1) qui s'étend autour d'un axe (X) de la cage, la paroi tronconique (1) présentant
- une surface intérieure (4) et une surface extérieure (5),
- des espaces ouverts traversants (10), répartis de façon équidistante sur toute la paroi tronconique (1) et chacun des espaces ouverts (10) étant apte à accueillir un corps roulant (29),la paroi tronconique (1) s'étendant entre un premier bord (2) présentant un premier diamètre (D1) et un second bord (3) présentent un second diamètre (D2), le second diamètre (D2) étant plus grand que le premier diamètre (D1),
le second bord (3) comportant une extrémité de bord (6) reliant la surface extérieure (5) et la surface intérieure (4) de la paroi tronconique (1),
**caractérisée en ce que** l'extrémité de bord (6) présente au moins un logement d'accueil (11) adapté pour accueillir un élément de fixation amovible d'un outillage de positionnement, et **en ce que** ledit au moins un logement d'accueil comporte au moins un trou (11) réalisé suivant une direction parallèle à l'axe (X) de la cage.

2. Cage (C1) selon la revendication 1, **caractérisé en ce que** ledit au moins un logement d'accueil (11) est réalisé dans la paroi tronconique entre deux espaces ouverts (10).

3. Cage (C1) selon la revendication 1 ou 2, dans laquelle il est prévu trois logements d'accueil sous forme de trois trous (11) réalisés suivant une direction parallèle à l'axe (X) de la cage.

4. Cage (C1) selon la revendication 2 et 3, dans laquelle ledit au moins un trou (11) débouche sur la surface extérieure (5) de la paroi tronconique (1) entre deux espaces ouverts (10).

5. Cage (C1) selon la revendication 4, dans laquelle ledit au moins un trou (11) débouche sensiblement à mi-distance entre le premier bord (2) et le second bord (3).

6. Cage (C1) selon la revendication 1, dans laquelle ledit au moins un logement d'accueil est un trou borgne réalisé entre deux espaces ouverts traversants dans l'épaisseur de ladite cage.

7. Cage (C1) selon l'une quelconque des revendications précédentes, comportant deux logements d'accueil réalisés diamétralement opposés si le nombre d'espaces ouverts (10) est pair, et diamétralement opposés décalés d'une distance correspondant à la moitié de la distance prise entre un bord d'un espace ouvert et le bord d'un espace ouvert adjacent si le nombre d'espaces ouverts est impair.

8. Cage (C1) selon l'une quelconque des revendications précédentes, comportant trois logements d'accueil (11) réalisés dans l'extrémité de bord (6) du second bord (3), les logements étant réalisés équidistants les uns des autres si le nombre d'espaces ouverts est un multiple de trois, et étant réalisés non équidistants si le nombre d'espaces ouverts n'est pas un multiple de trois.

9. Cage (C1) selon l'une quelconque des revendications précédentes, dans laquelle la paroi tronconique (1) est inclinée d'un angle compris entre sensiblement 5 et 35 degrés avec l'axe (X) de la cage ou compris entre sensiblement 5 et 50 degrés avec l'axe (X) de la cage.

10. Cage (C1) selon l'une quelconque des revendications précédentes, dans laquelle le premier bord (2) présente une extrémité coudée (9) orientée vers l'extérieur de la cage.

11. Cage (C1) selon l'une quelconque des revendications précédentes, dans laquelle les espaces ouverts (10) sont de section circulaire, pour accueillir des corps roulants (29) sous forme de billes ou bien sont de forme trapézoïdale pour accueillir des corps roulants réalisés sous forme de rouleaux coniques.

12. Système de roulement comportant :
- au moins une bague extérieure (26) présentant un chemin de roulement extérieur (31),
- au moins une bague intérieure (27) présentant un chemin de roulement intérieur (34), lesdites bagues intérieure et extérieure (27, 26) étant coaxiales centrées autour d'un axe de roulement,
- un jeu de corps roulants (29) roulant à la fois sur le chemin de roulement extérieur (31) et le chemin de roulement intérieur (34) dans un premier espace interne,et au moins une cage (C1) selon l'une quelconque des revendications précédentes, les corps roulants étant insérés dans les espaces ouverts traversants.

13. Système de roulement selon la revendication 12, comportant :
- au moins une seconde bague intérieure (28) présentant un second chemin de roulement intérieur (35), ladite seconde bague intérieure (28) et ladite bague extérieure (26) étant coaxiales centrées autour dudit axe de roulement,
- un second jeu de corps roulants (30) roulant à la fois sur le second chemin de roulement intérieur (35) et sur un second chemin de roulement extérieur (32) de la bague extérieure (26) dans un second espace interne,
et au moins une seconde cage (C2), ladite seconde cage (C2) étant monobloc et comprenant :
- une paroi tronconique (101) s'étendant autour d'un axe, une surface intérieure (104) apte à faire face au second chemin de roulement intérieur (35) et une surface extérieure (105) apte à faire face audit second chemin de roulement extérieur (32),
- des espaces ouverts (110) étant ménagés à travers la paroi tronconique (101), les espaces ouverts (110) étant uniformément répartis sur toute la paroi tronconique (101) et chacun des espaces ouverts (110) étant destiné à accueillir un corps roulant (30) dudit jeu de corps roulants (30),
o la paroi tronconique (101) s'étendant entre un premier bord (102) présentant un premier diamètre et un second bord (103) présentent un second diamètre, le second diamètre étant plus grand que le premier diamètre,
o le second bord (103) comportant une extrémité de bord reliant la surface extérieure (105) et la surface intérieure (104) de la paroi tronconique (101).

14. Ensemble comportant une cage (C1) pour système de roulement selon l'une quelconque des revendications 1 à 11 et un outillage (14) de positionnement de ladite cage (C1) dans un système de roulement selon la revendication 12, ledit outillage (14) comportant un collier équipé d'au moins un élément de fixation, apte à s'insérer au moins partiellement dans au moins un logement d'accueil de ladite cage.

15. Ensemble selon la revendication 14, dans lequel ledit élément de fixation est une vis (19) apte à s'insérer dans ladite ouverture traversante (20) et à se fixer par vissage dans un trou (11) de ladite cage (C1).

16. Ensemble selon l'une quelconque des revendications 14 ou 15, dans lequel le collier présente un bord (17) présentant au moins partiellement un rebord (18) qui s'étend suivant une direction radiale vers l'extérieur du collier.

17. Procédé de montage d'un système de roulement selon la revendication 13, mettant en oeuvre un ensemble selon la revendication 14 ou 15, le procédé comportant les étapes suivantes :
- assemblage de la cage (C1) et de l'outillage de positionnement (14), en positionnant le collier de façon coaxial sur ladite cage et par engagement dudit élément de fixation (19) dans ledit logement d'accueil (11) de la cage (C1),
- positionnement de l'ensemble comportant la cage (C1) et l'outillage de positionnement (14) dans la bague extérieure (26), en plaçant la paroi tronconique (1) de la cage (C1) en face du chemin de roulement extérieur (31),
- positionnement des corps roulants (29) dans les espaces ouverts (10) traversant de la paroi tronconique (1) de la cage,
- positionnement de la bague intérieure (27) en plaçant le premier chemin de roulement intérieur (34) en face des corps roulants (29) placés dans les espaces ouverts (10) de la cage(C1),
- et retrait de l'outillage de positionnement (14) par désengagement dudit élément de fixation dudit logement d'accueil (19).

18. Procédé de montage selon la revendication 17, dans lequel l'étape de positionnement de l'ensemble comportant la cage (C1) et l'outillage de positionnement (14) est réalisée en faisant reposer un rebord (18) de l'outillage sur un rebord (36) de la bague extérieure (26),

## Patentansprüche

1. Käfig (C1) für ein Lager-System, wobei der Käfig einteilig ist und eine kegelförmige Wand (1) umfasst, welche sich um eine Achse (X) des Käfigs erstreckt, wobei die kegelförmige Wand (1) aufweist:
- eine innere Fläche (4) und eine äußere Fläche (5),
- durchgehende offene Räume (10), welche in gleich beabstandeter Weise an der gesamten kegelförmigen Wand (1) verteilt sind und wobei jeder der offenen Räume (10) dazu eingerichtet ist, einen Rollkörper (29) aufzunehmen, wobei sich die kegelförmige Wand (1) zwischen einem ersten Rand (2), welcher einen ersten Durchmesser (D1) aufweist, und einem zweiten Rand (3) erstreckt, welcher einen zweiten Durchmesser (D2) aufweist, wobei der zweite Durchmesser (D2) größer als der erste Durchmesser (D1) ist, wobei der zweite Rand (3) ein Randende (6) umfasst, welches die äußere Fläche (5) und die innere Fläche (4) der kegelförmigen Wand (1) verbindet,
**dadurch gekennzeichnet, dass** das Randende (6) wenigstens eine Aufnahmeausnehmung (11) aufweist, welche dazu eingerichtet ist, ein lösbares Befestigungselement eines Positionierungswerkzeugs aufzunehmen, und dadurch, dass die wenigstens eine Aufnahmeausnehmung wenigstens ein Loch (11) umfasst, welches einer Richtung parallel zu der Achse (X) des Käfigs folgend gebildet ist.

2. Käfig (C1) nach Anspruch 1, **dadurch gekennzeichnet, dass** die wenigstens eine Aufnahmeausnehmung (11) in der kegelförmigen Wand zwischen zwei offenen Räumen (10) gebildet ist.

3. Käfig (C1) nach Anspruch 1 oder 2, wobei drei Aufnahmeausnehmungen in Form von drei Löchern (11) gebildet sind, welche einer Richtung parallel zu der Achse (X) des Käfigs folgend gebildet sind.

4. Käfig (C1) nach Anspruch 2 und 3, wobei das wenigstens eine Loch (11) an der äußeren Fläche (5) der kegelförmigen Wand (1) zwischen zwei offenen Räumen (10) mündet.

5. Käfig (C1) nach Anspruch 4, wobei das wenigstens eine Loch (11) im Wesentlichen auf halber Strecke zwischen dem ersten Rand (2) und dem zweiten Rand (3) mündet.

6. Käfig (C1) nach Anspruch 1, wobei die wenigstens eine Aufnahmeausnehmung ein Sackloch ist, welches zwischen zwei offenen Räumen gebildet ist, welche in der Dicke des Käfigs durchgehend sind.

7. Käfig (C1) nach einem der vorhergehenden Ansprüche, umfassend zwei Aufnahmeausnehmungen, welche diametral gegenüberliegend gebildet sind, wenn die Anzahl der offenen Räume (10) geradzahlig ist, und diametral gegenüberliegend um eine Distanz versetzt, welche einer Hälfte des Abstands genommen zwischen einem Rand eines offenen Raums und dem Rand eines benachbarten offenen Raums entspricht, wenn die Anzahl der offenen Räume ungerade ist.

8. Käfig (C1) nach einem der vorhergehenden Ansprüche, umfassend drei Aufnahmeausnehmungen (11), welche in dem Randende (6) des zweiten Rands (3) gebildet sind, wobei die Ausnehmungen voneinander gleich beabstandet gebildet sind, wenn die Anzahl der offenen Räume ein Vielfaches von Drei ist, und nicht gleich beabstandet sind, wenn die Anzahl der offenen Räume kein Vielfaches von Drei ist.

9. Käfig (C1) nach einem der vorhergehenden Ansprüche, wobei die kegelförmige Wand (1) um einen Winkel geneigt ist, welcher im Wesentlichen zwischen 5 und 35 Grad mit der Achse (X) des Käfigs beträgt, oder im Wesentlichen zwischen 5 und 50 Grad mit der Achse (X) des Käfigs beträgt.

10. Käfig (C1) nach einem der vorhergehenden Ansprüche, wobei der erste Rand (2) ein gebogenes Ende (9) aufweist, welches in Richtung der Außenseite des Käfigs orientiert ist.

11. Käfig (C1) nach einem der vorhergehenden Ansprüche, wobei die offenen Räume (10) von kreisförmigem Querschnitt sind, um Rollkörper (29) in Form von Kugeln aufzunehmen, oder von Trapezform sind, um Rollkörper aufzunehmen, welche in Form von Rollkegeln gebildet sind.

12. Lager-System, umfassend:
- wenigstens einen äußeren Ring (26), welcher einen äußeren Rollweg (31) aufweist,
- wenigstens einen inneren Ring (27), welcher einen inneren Rollweg (34) aufweist, wobei die inneren und äußeren Ringe (27, 26) koaxial um eine Lagerachse zentriert sind,
- einen Satz von Rollkörpern (29), welche zugleich auf dem äußeren Rollweg (31) und dem inneren Rollweg (34) in einem ersten inneren Raum abrollen, sowie wenigstens einen Käfig (C1) nach einem der vorhergehenden Ansprüche, wobei die Rollkörper in die durchgehenden offenen Räume eingesetzt sind.

13. Lager-System nach Anspruch 12, umfassend:
- wenigstens einen zweiten inneren Ring (28), welcher einen zweiten inneren Rollweg (35) aufweist, wobei der zweite innere Ring (28) und der äußere Ring (26) koaxial um die Lagerachse herum zentriert sind,
- einen zweiten Satz von Rollkörpern (30), welche zugleich auf dem zweiten inneren Rollweg (35) und einem zweiten äußeren Rollweg (32) des äußeren Rings (26) in einem zweiten inneren Raum abrollen, sowie wenigstens einen zweiten Käfig (C2), welcher zweite Käfig (C2) einteilig ist und umfasst:
- eine kegelförmige Wand (101), welche sich um eine Achse erstreckt, eine innere Fläche (104), welche dazu eingerichtet ist, zu dem zweiten inneren Rollweg (35) zu weisen, und eine äußere Fläche (105), welche dazu eingerichtet ist, zu dem zweiten äußeren Rollweg (32) zu weisen,
- offene Räume (110), welche durch die kegelförmige Wand (101) durchgehend vorgesehen sind, wobei die offenen Räume (110) gleichförmig an der gesamten kegelförmigen Wand (101) verteilt sind und jeder der offenen Räume (110) dazu vorgesehen ist, einen Rollkörper (30) des Satzes von Rollkörpern (30) aufzunehmen,
- wobei sich die kegelförmige Wand (101) zwischen einem ersten Rand (102), welcher einen ersten Durchmesser aufweist, und einem zweiten Rand (103) erstreckt, welcher einen zweiten Durchmesser aufweist, wobei der zweite Durchmesser größer als der erste Durchmesser ist,
- wobei der zweite Rand (103) ein Randende umfasst, welches die äußere Fläche (105) und die innere Fläche (104) der kegelförmigen Wand (101) verbindet.

14. Anordnung, umfassend einen Käfig (C1) für ein Lager-System nach einem der Ansprüche 1 bis 11 und ein Positionierungswerkzeug (14) für den Käfig (C1) in einem Lager-System nach Anspruch 12, wobei das Werkzeug (14) eine Schelle umfasst, welche mit wenigstens einem Befestigungselement ausgestattet ist, welches in der Lage ist, sich wenigstens teilweise in wenigstens eine Aufnahmeausnehmung des Käfigs einzuführen.

15. Anordnung nach Anspruch 14, wobei das Befestigungselement eine Schraube (19) ist, welche dazu eingerichtet ist, sich in die durchgehende Öffnung (20) einzuführen und sich durch Verschraubung in einem Loch (11) des Käfigs (C1) zu befestigen.

16. Anordnung nach einem der Ansprüche 14 oder 15, wobei die Schelle einen Rand (17) aufweist, welcher wenigstens teilweise eine Kante (18) aufweist, welche sich einer radialen Richtung folgend zu der Außenseite der Schelle erstreckt.

17. Verfahren zum Montieren eines Lager-Systems nach Anspruch 13, wobei eine Anordnung nach Anspruch 14 oder 15 hergestellt wird, das Verfahren umfassend die folgenden Schritte:
- Zusammenfügen des Käfigs (C1) und des Positionierungswerkzeugs (14), indem die Schelle in koaxialer Weise an dem Käfig positioniert wird, und durch Eingreifen des Befestigungselements (19) in der Aufnahmeausnehmung (11) des Käfigs (C1),
- Positionieren der Anordnung, umfassend den Käfig (C1) und das Positionierungswerkzeug (14) in dem äußeren Ring (26), durch Platzieren der kegelförmigen Wand (1) des Käfigs (C1) gegenüber dem äußeren Rollweg (31),
- Positionieren der Rollkörper (29) in den offenen Räumen (10), welche durch die kegelförmige Wand (1) des Käfigs hindurchtreten,
- Positionieren des inneren Rings (27) durch Platzieren des ersten inneren Rollwegs (34) gegenüber den Rollkörpern (29), welche in den offenen Räumen (10) des Käfigs (C1) platziert worden sind,
- und Entfernen des Positionierungswerkzeugs (14) zum Lösen des Befestigungselements der Aufnahmeausnehmung (19).

18. Verfahren nach Anspruch 17, wobei der Schritt des Positionierens der Anordnung, welche den Käfig (C1) und das Positionierungswerkzeug (14) umfasst, durchgeführt wird, indem ein Rand (18) des Werkzeugs an einem Rand (36) des äußeren Rings (26) angelegt wird.

## Claims

1. Cage (C1) for a bearing system, said cage being made in one piece and comprising a frustoconical wall (1) extending about an axis (X) of the cage, the frustoconical wall (1) having
- an inner surface (4) and an outer surface (5),
- penetrating open spaces (10) evenly spaced over the entire frustoconical wall (1), and each of the open spaces (10) being capable of receiving a rolling body (29), the frustoconical wall (1) extending between a first edge (2) having a first diameter (D1) and a second edge (3) have a second diameter (D2), the second diameter (D2) being greater than the first diameter (D1),
the second edge (3) having an edge end (6) connecting the outer surface (5) and the inner surface (4) of the frustoconical wall (1),
**characterised in that** the edge end (6) has at least one receiving recess (11) suitable for receiving a removable fastening element of a positioning tool, and **in that** said at least one receiving recess comprises at least one hole (11) made in a direction parallel to the axis (X) of the cage.

2. Cage (C1) according to claim 1, **characterised in that** said at least one receiving recess (11) is formed in the frustoconical wall between two open spaces (10).

3. Cage (C1) according to either claim 1 or claim 2, wherein three receiving recess are provided in the form of three holes (11) made in a direction parallel to the axis (X) of the cage.

4. Cage (C1) according to claim 2 and claim 3, wherein said at least one hole (11) opens out onto the outer surface (5) of the frustoconical wall (1) between two open spaces (10).

5. Cage (C1) according to claim 4, wherein said at least one hole (11) opens out substantially midway between the first edge (2) and the second edge (3).

6. Cage (C1) according to claim 1, wherein said at least one receiving recess is a blind hole formed between two open spaces passing through the thickness of said cage.

7. Cage (C1) according to any of the previous claims, comprising two receiving recesses made diametrically opposite one another if the number of open spaces (10) is even, and diametrically opposite one another and offset by a distance corresponding to half the distance measured between one edge of an open space and the edge of an adjacent open space if the number of open spaces is odd.

8. Cage (C1) according to any of the previous claims, comprising three receiving recesses (11) formed in the edge end (6) of the second edge (3), the recesses being made such that they are equally spaced from one other if the number of open spaces is a multiple of three, and such that they are not equally spaced from one another if the number of open spaces is not a multiple of three.

9. Cage (C1) according to any of the previous claims, wherein the frustoconical wall (1) is inclined at an angle that substantially lies in the range 5 to 35 degrees with the axis (X) of the cage or substantially in the range 5 to 50 degrees with the axis (X) of the cage.

10. Cage (C1) according to any of the previous claims, wherein the first edge (2) has a bent end (9) facing outwards from the cage.

11. Cage (C1) according to any of the previous claims, wherein the open spaces (10) have a circular cross-section in order to receive rolling bodies (29) in the form of balls or have a trapezoidal shape in order to receive rolling bodies produced in the form of conical rollers.

12. Bearing system comprising:
- at least one outer ring (26) having an outer race (31),
- at least one inner ring (27) having an inner race (34), said inner and outer rings (27, 26) being coaxial and centred about a bearing axis,
- a set of rolling bodies (29) rolling on both the outer race (31) and the inner race (34) in a first inner space, and at least one cage (C1) according to any of the previous claims, the rolling bodies being inserted into the penetrating open spaces.

13. Bearing system according to claim 12, comprising:
- at least one second inner ring (28) having a second inner race (35), said second inner ring (28) and said outer race (26) being coaxial and centred about said bearing axis,
- a second set of rolling bodies (30) rolling on both the second inner race (35) and on a second outer race (32) of the outer ring (26) in a second inner space,
and at least one second cage (C2), said second cage (C2) being made in one piece and comprising:
- a frustoconical wall (101) extending about an axis, an inner surface (104) capable of facing the second inner race (35) and an outer surface (105) capable of facing said second outer race (32),
- open spaces (110) being formed through the frustoconical wall (101), the open spaces (110) being evenly distributed over the entire frustoconical wall (101) and each of the open spaces (110) being intended to receive a rolling body (30) of said set of rolling bodies (30),
-- the frustoconical wall (101) extending between a first edge (102) having a first diameter and a second edge (103) having a second diameter, the second diameter being greater than the first diameter,
-- the second edge (103) having an edge end connecting the outer surface (105) and the inner surface (104) of the frustoconical wall (101).

14. Assembly comprising a cage (C1) for a bearing system according to any of claims 1 to 11 and a tool (14) for positioning said cage (C1) in a bearing system according to claim 12, said tool (14) comprising a collar equipped with at least one fastening element, capable of being inserted at least partially into at least one receiving recess of said cage.

15. Assembly according to claim 14, wherein said fastening element is a screw (19) capable of being inserted into said penetrating opening (20) and of being fixed by screwing into a hole (11) of said cage (C1).

16. Assembly according to any of claims 14 or 15, wherein the collar has an edge (17) having at least partially a flange (18) extending in a radially outward direction from the collar.

17. Method for mounting a bearing system according to claim 13, implementing an assembly according to either claim 14 or claim 15, the method comprising the steps of:
- assembling the cage (C1) and the positioning tool (14) by positioning the collar coaxially on said cage and by engaging said fastening element (19) inside said receiving recess (11) of the cage (C1),
- positioning the assembly comprising the cage (C1) and the positioning tool (14) in the outer ring (26) by placing the frustoconical wall (1) of the cage (C1) such that it faces the outer race (31),
- positioning the rolling bodies (29) in the penetrating open spaces (10) of the frustoconical wall (1) of the cage,
- positioning the inner ring (27) by placing the first inner race (34) such that it faces the rolling bodies (29) placed in the open spaces (10) of the cage (C1),
- and removing the positioning tool (14) by disengaging said fastening element from said receiving recess (19).

18. Mounting method according to claim 17, wherein the step of positioning the assembly comprising the cage (C1) and the positioning tool (14) is carried out by resting a flange (18) of the tool on a flange (36) of the outer ring (26).
